Europäisches Patentamt

European Patent Office

Office européen des brevets

(19)

(11) Publication number: **0 387 353**

**A1**

## (12) EUROPEAN PATENT APPLICATION
### published in accordance with Art. 158(3) EPC

(21) Application number: 89908866.0

(51) Int. Cl.⁵: **G05B 19/04**

(22) Date of filing: 26.07.89

(86) International application number:
**PCT/JP89/00775**

(87) International publication number:
**WO 90/01734 (22.02.90 90/05)**

(30) Priority: 03.08.88 JP 1936/87

(43) Date of publication of application:
**19.09.90 Bulletin 90/38**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KIYA, Nobuyuki**
**13-106, Yokokawachojutaku 108,**
**Yokokawacho**
**Hachioji-shi Tokyo 193(JP)**
Inventor: **MAEDA, Kimio**
**52-2-103, Matsugaya**
**Hachioji-shi Tokyo 192-03(JP)**
Inventor: **SAIKI, Yoshiharu Fanuc Dai-3**
**Vira-karamatsu**
**3527-1, Shibokusa Oshinomura,**
**Minamitsuru-gun**
**Yamanashi 401-05(JP)**

(74) Representative: **Brunner, Michael John et al**
**GILL JENNINGS & EVERY 53-64 Chancery**
**Lane**
**London WC2A 1HN(GB)**

(54) **TRACE CONTROL METHOD FOR PC.**

(57) This invention relates to a trace control method for PC (programmable controller) for debugging a user program in the PC. Trace functions (3), (5) added to a source program (1) trace a plurality of designated signals and store them in memory. Signals necessary for program checking are selected from among this plurality of signals and displayed. Tracing can made only in a single run and the state of the change of signals can be distinguished clearly.

```
          ┌─────────────────────┐  ╭─1
          │    ¦                │
          │ ──A = B * 2        │
          │ ── TRACE ('A=B*2', A,B)│
          │    ¦                │
          │ ──A = C * 2        │
          │ ── TRACE ('A=C*2', A,C)│
          │    ¦                │
          └─────────────────────┘
```

Fig. 1

# D E S C R I P T I O N

## TRACE CONTROL METHOD FOR PC

### Technical Field

The present invention relates to a trace control method for a PC (programmable controller) employed to debug a user program in the PC, and more particularly, to a trace control method for a PC wherein a plurality of signals are simultaneously traced and the required signals are selectively displayed thereafter.

### Background Art

To confirm the execution of a user program in a PC (programmable controller) when debugging the user program, a source program is additionally provided with a function of displaying currently executed commands on the source program or a process of storing required signals in a memory. This is particularly necessary when the user program is written in a high-level language such as PASCAL or the like, because the source program and the object program are not in accord with each other.

As an example, Japanese Patent Application No. 63-71122 discloses a trace control method for a PC wherein a trace function is provided for tracing signals.

Tracing for finding faults that rarely occur, etc., is usually not carried out repeatedly, however, but is performed only at a specified timing. In such a tracing, since a plurality of signals are traced at one time, a plurality of signals to be confirmed are displayed, and accordingly, it is difficult to easily recognize changes in the signals, and thus problems arise in practice.

## Disclosure of the Invention

The present invention was created in view of the above circumstances, and an object thereof is to provide a trace control method for a PC wherein a plurality of signals are simultaneously traced and the required signals are selectively displayed thereafter.

To achieve the above object, the present invention provides a trace control method for a PC (programmable controller) employed to debug a user program in the PC, the method being characterized by commanding a trace function, including a plurality of identification symbols and a plurality of signals, in a source program of the PC written in a high-level language, tracing the signals and storing same in a memory, and selecting and displaying required signals from among the stored signals.

The trace function added to the source program allows a plurality of specified signals to be traced and stored in the memory, and among these signals, those required for checking the program are selected and displayed, whereby changes in the signals can be clearly recognized.

Brief Description of the Drawings

Fig. 1 is a diagram showing an example of a program of a trace control method for a PC according to the present invention;

Fig. 2 is a diagram showing an example of trace signals stored in a trace region;

Fig. 3 is a diagram showing an example of a trace display in which specified signals selected from among a plurality of signals are displayed; and

Fig. 4 is a block diagram showing a hardware of a PC (programmable controller) for carrying out the present invention.


Best Mode of Carrying Out the Invention

An embodiment of the present invention will be described with reference to the drawings.

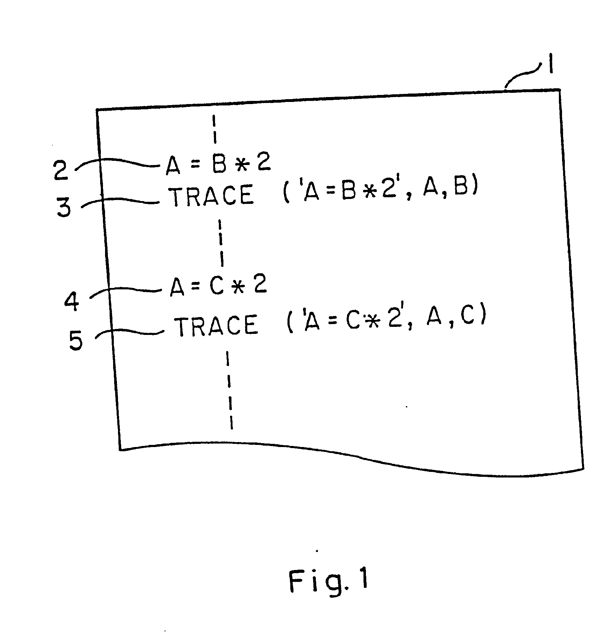

Figure 1 shows an example of a program of a trace control method for a PC according to the invention. In the figure, 1 denotes a source program produced using PASCAL; 2 and 4 denote usual calculation programs; and 3 and 5 denote trace functions added for tracing. Here, "TRACE" indicates a trace function; in trace function 3, 'A = B * 2' indicates an identification symbol, and A and B indicate parameters which specify signals to be traced; and in trace function 5, 'A = C * 2' indicates an identification symbol, and A and C indicate parameters.

Due to the trace function command, trace signals are stored in a trace region.  A plurality of trace functions can be specified in a single source program.

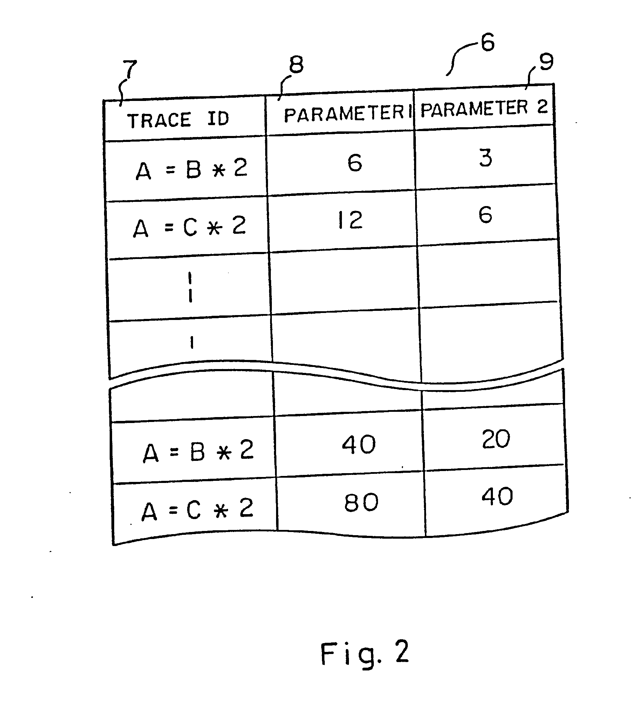

Figure 2 shows an example of trace signals stored in the trace region.  In the figure, 6 denotes the trace region; 7 denotes the identification symbol; 8 denotes a region for storing a signal specified by a parameter 1, namely, a signal A specified by the first parameter; and similarly, 9 denotes a region for storing a signal specified by the second parameter, i.e., a signal B. Accordingly, when the identification symbol of the trace function changes during the course of the program, different signals are stored in the regions 8 and 9; namely, different signals are alternately stored.

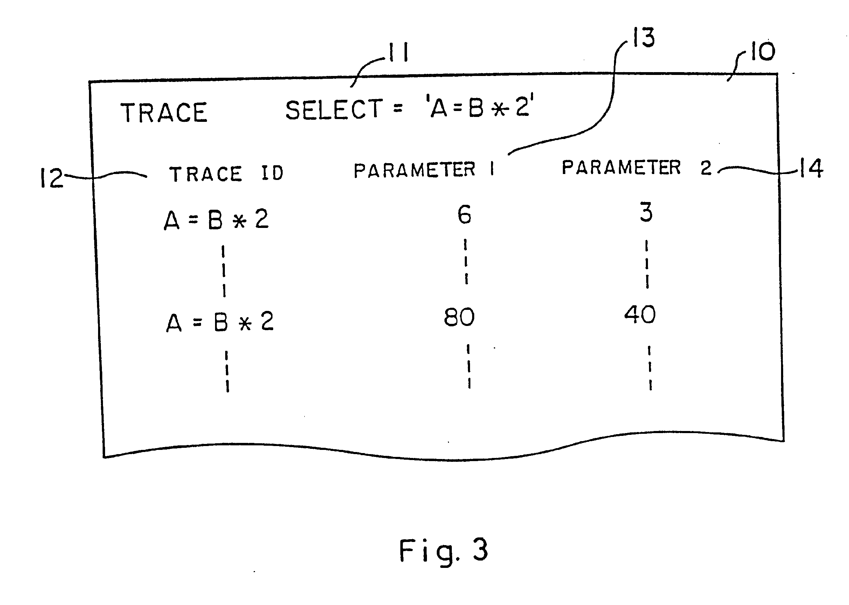

Figure 3 shows an example of a trace display in which specified signals selected from among a plurality of signals are displayed.  In the figure, 10 denotes a trace display which is displayed on the screen of an automatic programming apparatus or the like; 11 denotes an identification symbol for selecting signals to be displayed, in this case 'A = B * 2', and thus the signals A and B specified by the parameters of the trace function 3 are selected; 12 denotes an identification symbol of the trace function; 13 denotes the signal A specified by the parameter 1; and 14 denotes the signal B specified by the parameter 2.

Accordingly, the signals specified by a plurality of trace functions are simultaneously traced, and from among these signals, desired signals are selectively displayed, and thus only one tracing operation need be carried out and only the required signals can be selectively displayed.

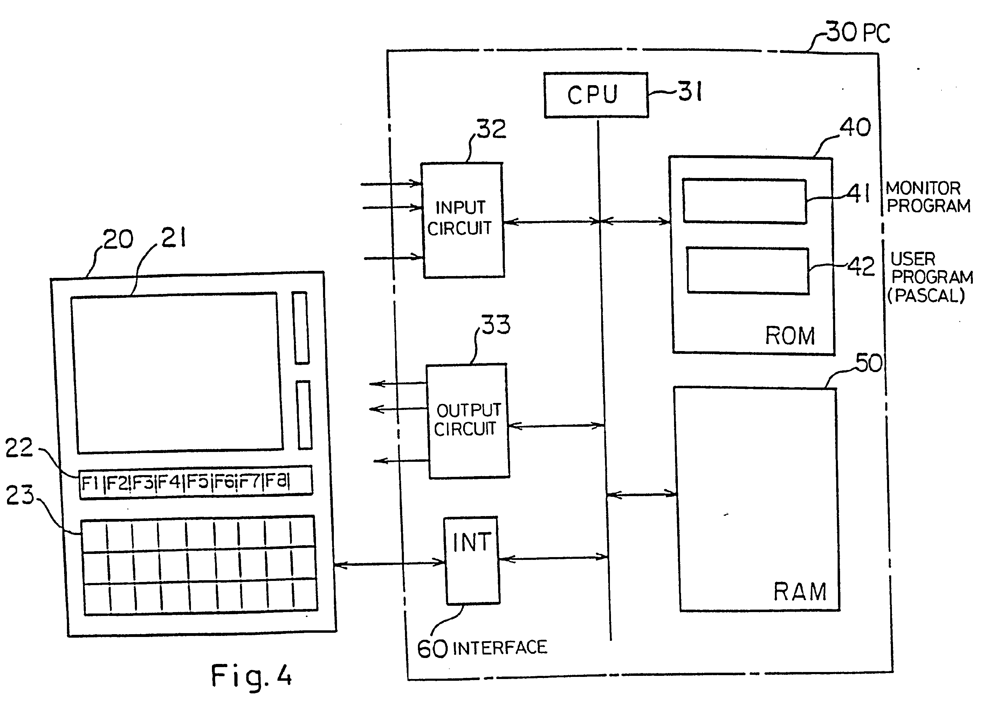

Figure 4 is a block diagram showing a hardware of a PC (programmable controller) for carrying out the present invention. In the figure, 20 denotes an automatic programming apparatus; 21 denotes a display screen on which the specified trace signals are displayed and which comprises, e.g., a CRT, a liquid-crystal display, or the like; 22 denotes function keys; and 23 denotes operation keys.

Also in Fig. 4, 30 denotes a PC (programmable controller); 31 denotes a processor for globally controlling the PC; 32 denotes an input circuit which receives signals from outside and supplies the signals to a bus after converting the levels thereof; and 33 denotes an output circuit for outputting internal signals to the outside.

A ROM 40 stores a monitor program 41 for monitoring the execution of a user program, and a user program 42 produced using PASCAL for controlling a machine tool or the like, etc.; and a RAM 50 stores various data, specifically, input signals, output signals, auxiliary relay signals, and internal register signals are stored in this memory.

An interface 60 for the automatic programming apparatus comprises an interface circuit for connecting the bus and the automatic programming apparatus 20.

In the above description, PASCAL is mentioned as a language for producing the source program, but the invention can be similarly applied to other languages; in the case of a program produced by using a ladder program, the required signals can be similarly traced by macroinstructions defining trace functions, etc.

As described above, according to the present invention, a plurality of trace functions are provided in a source program, and a plurality of signals are traced such that the required signals are selected and displayed thereafter. Accordingly, only one tracing operation is needed and changes in the signals can be clearly recognized, and therefore, the invention effectively detects errors and intermittent faults, etc. in the program.

CLAIMS

1. A trace control method for a PC (programmable controller) employed to debug a user program in the PC, comprising:

commanding a trace function, including a plurality of identification symbols and a plurality of signals, in a source program of the PC written in a high-level language;

tracing said plurality of signals and storing the same in a memory; and

selecting and displaying required signals from among said plurality of signals.

2. A trace control method according to claim 1, wherein said high-level language comprises PASCAL.

## ABSTRACT

A trace control method for a PC (programmable controller) is provided which is employed to debug a user program in the PC by using trace functions (3, 5) added to a source program (1), whereby a plurality of signals that are specified are traced and stored in a memory. Among these signals, those required for checking the program are selected and displayed, and thus only one tracing operation need be carried out and changes in the signals can be clearly recognized.

EP 0 387 353 A1

A = B * 2

TRACE ('A=B*2', A, B)

A = C * 2

TRACE ('A=C*2', A, C)

Fig.1

| TRACE ID | PARAMETER 1 | PARAMETER 2 |
|----------|-------------|-------------|
| A = B * 2 | 6 | 3 |
| A = C * 2 | 12 | 6 |
| ¦ | | |
| ¦ | | |
| A = B * 2 | 40 | 20 |
| A = C * 2 | 80 | 40 |

Fig. 2

EP 0 387 353 A1

| TRACE | SELECT = 'A = B * 2' | |
|---|---|---|
| TRACE ID | PARAMETER 1 | PARAMETER 2 |
| A = B * 2 | 6 | 3 |
| | | |
| A = B * 2 | 80 | 40 |

Fig. 3

Fig. 4

EP 0 387 353 A1

# INTERNATIONAL SEARCH REPORT

International Application No **PCT/JP89/00775**

**I. CLASSIFICATION OF SUBJECT MATTER** (if several classification symbols apply, indicate all) ⁶

According to International Patent Classification (IPC) or to both National Classification and IPC

Int. Cl⁴     G05B19/04

**II. FIELDS SEARCHED**

| Minimum Documentation Searched ⁷ | |
|---|---|
| Classification System | Classification Symbols |
| IPC | G05B19/04 |

Documentation Searched other than Minimum Documentation
to the Extent that such Documents are Included in the Fields Searched ⁸

Jitsuyo Shinan Koho       1932 – 1989
Kokai Jitsuyo Shinan Koho    1971 – 1989

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| Y | JP, A, 63-25708 (Hitachi, Ltd.) 3 February 1988 (03. 02. 88) (Family : none) | 1 – 2 |
| Y | JP, A, 61-161519 (Omron Tateisi Electronics Co.) 22 July 1986 (22. 07. 86) (Family : none) | 1 – 2 |
| Y | JP, A, 59-201110 (Toshiba Corp.) 14 November 1984 (14. 11. 84) (Family : none) | 1 – 2 |
| Y | JP, A, 58-223811 (Hitachi, Ltd.) 26 December 1983 (26. 12. 83) (Family : none) | 1 – 2 |
| Y | JP, A, 62-152005 (Fanuc Ltd.) 7 July 1987 (07. 07. 87) (Family : none) | 2 |

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 27, 1989 (27. 09. 89) | October 16, 1989 (16. 10. 89) |
| International Searching Authority | Signature of Authorized Officer |
| Japanese Patent Office | |

International Application No. PCT/JP89/00775

| FURTHER INFORMATION CONTINUED FROM THE SECOND SHEET | | |
|---|---|---|
| A | JP, A, 60-159911 (Yokogawa Hokushin Electric Corporation) 21 August 1985 (21. 08. 85) (Family : none) | 1 - 2 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers ............, because they relate to subject matter not required to be searched by this Authority, namely:

2.☐ Claim numbers ............, because they relate to parts of the international application that do not comply with the prescribed requirements to such an extent that no meaningful international search can be carried out, specifically:

3.☐ Claim numbers ............, because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)